# EUROPEAN PATENT APPLICATION

(11) **EP 4 756 686 A1**
(43) Date of publication of application: **10.06.2026**
(21) Application number: 24218046.1
(22) Date of filing: 06.12.2024
(51) Int. Cl.: G06Q 10/0635, G06Q 50/04, G06V 20/52

(54) **COMPUTER-IMPLEMENTED METHOD FOR CALCULATING A PROCESS RISK IN BIOPHARMACEUTICAL MANUFACTURING PROCESSES**

(71) Applicant: Innerspace GmbH, 6020 Innsbruck (AT)
(72) Inventor: Scheler, Sebastian, Innsbruck (AT); Berger, Andreas, Innsbruck (AT)
(74) Representative: Ziebig Hengelhaupt Intellectual Property Attorneys Patentanwaltskanzlei PartGmbB

(57) **Abstract**

The invention relates to a computer implemented method (100,200,300) for automatically determining a process risk (62) of a biopharmaceutical manufacturing process. A video-recorded process is segmented (120) into microsteps (34), for each microstep (34) a complete list of all possible hazards (54) is retrieved. For each hazard (54), a weighted hazard criticality (WHC) (58) is calculated based on automatically determined risk factors (56) as well as additional risk moderators (72). A process frame library (50), based on a property graph database (74) architecture, stores verified reference process frames (34) along with potential hazards (54) and associated risk data (56). Manufacturing process simulation is enhanced by this data-driven and automated risk assessment, enabling more effective risk management and advanced manufacturing process optimization.

## Description

### FIELD OF THE INVENTION

The invention relates to biopharmaceutical manufacturing processes. In particular, the invention relates to a computer-implemented method and automated calculation of risks of process failures in biopharmaceutical manufacturing processes.

### BACKGROUND OF THE INVENTION

Biopharmaceutical manufacturing processes are complex and critical operations that require precise control to ensure the quality, safety, and efficacy of medical products and treatments. Risks in biopharmaceutical manufacturing significantly impact patient safety and product quality, making robust quality risk management essential across the entire product lifecycle. This requires a comprehensive, data-driven understanding of risks at every stage, from development to distribution. The inherent complexity of this industry demands a holistic and data-centric approach that enables risk-based decision-making throughout the product lifecycle.

However, these processes are inherently prone to failures, which can have significant consequences on product quality, patient health, and business profitability. Process failures in biopharmaceutical manufacturing can result in costly rework, waste, and even regulatory non-compliance. The financial impact of process failures is immense, with estimates suggesting that a single failure event can cost up to millions of euros to rectify. Moreover, the consequences of compromised product quality can be dangerous, compromising patient safety and trust.

Therefore, risk management is essential in biopharmaceutical manufacturing to mitigate these risks and ensure compliance with regulatory requirements. However, traditional risk assessment methods often rely on manual data collection, which is time-consuming, labor-intensive, and prone to errors. The lack of complete risk information hinders the development of mature quality risk management, leaving manufacturers vulnerable to process failures. The increasing complexity of biopharmaceutical manufacturing processes, coupled with the need for real-time monitoring and control, has created a pressing need for innovative solutions that can accurately assess and manage risks in critical operations.

Known solutions, for instance, track such operator interventions and detect deviations from preset conditions. WO 2020/039104A1, for example, discloses a monitoring system for a manufacturing system for biopharmaceutical products for determining, by an image capturing device, whether a preset criterion for an operator interaction is fulfilled. Whereas traditional approaches focus on interactions and particular events in such processes, there is no holistic data-driven approach in managing risks of biopharmaceutical manufacturing processes.

### DISCLOSURE OF THE INVENTION

It can be seen as an object of the invention to provide an improved data-driven method for assessing and managing risks related to biopharmaceutical manufacturing processes. Improvements can relate to a higher accuracy and a higher granularity of risk-related information and data. An underlying thought of the proposed solution can be seen in the aspect that traditional risk management methods often fall short due to their lack of objectivity and reproducibility. These limitations hinder, for example, an automation and computer supported management of risk management processes across the product lifecycle. Addressing these challenges requires innovative solutions that allow data-driven and automated quality risk management.

Disclosed is a computer-implemented method for calculating an overall process risk of process failures in biopharmaceutical manufacturing processes. The method comprises a step of capturing, by a capturing unit, a process dataset representing a biopharmaceutical manufacturing process. The process dataset comprises 2D video data, 3D stereoscopic video data, audio data, glove sensor data, process control data and/or point cloud data of the manufacturing process.

"2D video data" can refer to a type of digital information that captures two-dimensional visual representations of an event or process over time. In the context of biopharmaceutical manufacturing, 2D video data typically involves capturing images or frames from a camera or other imaging device as it records a specific process step or operation. An example of using 2D video data in biopharmaceutical manufacturing is capturing an operator performing a critical task, such as filling vials with a specific liquid or placing them on a tray. 2D video data can provide a detailed visual record of a manufacturing process, process steps, or composites. 3D video data can refer to a type of digital media that combines the concepts of three-dimensional (3D) graphics and video recording. 3D video data can be a representation of moving images in three dimensions with Depth perception, 3D representation with position, orientation, and appearance of objects in three dimensions (x, y, z coordinates) as well as stereoscopic vision with two offset images presented to the viewer, creating a 3D perspective of the images.

In the context of biopharmaceutical manufacturing, "audio data" can refer to the collection and analysis of sound-based information that can be used to monitor, control, or improve various aspects of pharmaceutical production. This can comprise acoustic sensors, acoustic recordings, or monitoring of environmental conditions along with analysis of audio signals. "Glove sensor data" can relate to measurements captured by sensor devices attached to moving parts like gloves of an operator. By tracking a movement, acceleration, and/or position of an operator's gloves including fingers, a procedure can be well-described as quantitative data this way. "Process control data" can refer to various data and measurements which monitor, regulate and optimize aspects of a manufacturing process. This can include temperature readings, pressure managements, flow rate data, level indicators, pH levels and other process influencing variables. "Point cloud data" can refer to a 3D geometric representation of elements of a manufacturing process that consists of a set of points in space, each with its own unique coordinates and other attributes such as color or intensity.

The capturing unit is a video camera, a radar device, a 3D stereoscopic camera, depth sensors, light scanner, Lidar devices, sensor gloves and/or time-of-flight camera. In other words, a real technical process as part of the physical manufacturing process is electronically measured or captured for analysis. A video camera is an electronic device that captures and records visual information in the form of moving images. A 3D stereoscopic camera is an electronic device that captures and records visual information in three dimensions, utilizing the principles of stereo vision to create a sense of depth perception. The camera comprises two or more imaging sensors, positioned at a specific distance apart, which capture identical scenes from slightly different angles. A depth sensor for capturing a process is an electronic device that utilizes various technologies such as structured light, stereo vision, or time-of-flight to measure the distance and spatial relationships between objects in a scene.

The sensor captures three-dimensional (3D) information about the environment, including the position, orientation, and shape of objects. The depth sensor may be used to capture processes allowing for detailed analysis and monitoring of process parameters such as distance traveled, speed, acceleration, and spatial relationships between moving parts and objects. A sensor-equipped glove for capturing a process is a wearable device comprising a flexible, articulated structure adapted to be worn on the hand of an operator or robot and equipped with one or more sensors embedded within the glove's material and/or arranged at a robot's arm. The sensors are configured to detect and measure various parameters related to the process being performed by the operator and/or a robotic arm, such as force, pressure, temperature, humidity, acceleration, orientation, and/or proximity. According to an example, a process dataset comprises machine control data, for example instructions and/or parameters for the control of robotic or other automation devices.

A time-of-flight (ToF) camera for capturing a process is a type of imaging device that utilizes the principle of time-of-flight ranging to measure the distance and velocity of objects within its field of view. The ToF camera comprises an illumination source, such as a laser or LED array, which emits light pulses towards the scene being captured. A process can be an entire manufacturing process, or parts of a manufacturing process. For example, this step can generate data related to the overall scene being captured, as well as discrete motions of the sub-tasks occurring within the field of view.

In a next step, segmenting, by a process data analysis unit, the process dataset into process frame datasets, wherein each process frame dataset represents one microstep of or within the manufacturing process. The process consists of time-sequenced steps, or motion primitives of micro process steps which have different objectives and characteristics. For example, a micro process step can be to "grab a vial with forceps", a next micro process step can be to "move the vial with the forceps to container tray". The segmentation of an entire process into micro-steps or process frame datasets (also referred to as "frames") in combination with an analysis that focuses on these process frame datasets as sub-segments instead of the entire process dataset provides significant advantages in terms of risk management as it provides a more granular and accurate view of process risks. A process frame dataset can be seen as a specific, smallest meaningful observable action within a manufacturing and product lifecycle operation. It's a building block that captures a single step or task performed by an operator, machine, or other entity involved in the production process.

A detection unit detects object datasets which represent physical objects in the process frame dataset, wherein the detection of objects is based on an object database configured for storing known objects. An object-detection module is adapted to identify physical objects within the frames, to collect and store them in a common data library for analysis and reuse. An "object" refers to any tangible entity or item that is involved in the production workflow. This can include but is not limited to: equipment components such as tubing, fittings, and valves, containers including vials, bottles, and bags, consumables like gloves, gowns, and masks, raw materials and ingredients used in formulation, in-process samples and testing equipment. For example, a collection of known objects is stored in a database for recognition of yet unknown objects in the process frame datasets.

For example, a combination of metadata and semantic relationships can be applied using unique identifiers (e.g., UUID) for each object type (e.g., "tong", "vial", etc.) along with relevant attributes such as names, description, category. Additionally, semantic relationships are stored using semantic concepts such as "Is-a:" wherein an object is a type of another object (e.g., "tong" is an instance of "tool"), "Has-part": An object has a part or component that belongs to it (e.g., a vial has a cap). "Part-of": A part or component is part of a larger object (e.g., the cap is part of the vial). The object detection and persistence can provide tracking of the detected object representing movements of the object, for example, by generating object position information.

The detection unit is also configured to detect action datasets in the process frame dataset, wherein the action datasets represent actions of the manufacturing process. The detection of actions is based on an action database configured for storing known action datasets. In other words, detection can be implemented by recognizing similar data patterns of the observed actions and stored actions in the action database. A frame mapping unit identifies a similar reference process frame dataset in a process frame library by comparing the process frame dataset with the detected objects and actions with reference process frame datasets in the process frame library. This process frame library is configured to store predefined reference process frame datasets along with corresponding objects and actions. A process frame library can be seen as a digital repository of standardized, reusable, and modularized representations of manufacturing process steps or micro-steps. Each "frame" or "process frame" in the library represents a specific action or task within a larger process. Each frame can be combined with other frames to form more complex processes.

For example, a frame ID can be returned or output by the frame mapping unit querying the process frame library to provide a unique reference to a specific process frame. According to an example, a highest similarity comparison is applied by the frame mapping unit by comparing vector representations of process frame datasets. The process frame library can comprise automatically or manually verified process frame datasets ensuring data quality and accuracy of identification results.

A hazards analysis unit retrieves, from the process frame library, potential hazards associated with a reference process frame dataset. The process frame library is configured to store potential process hazards associated with the reference process frame datasets. The process frame library stores all known or possible hazards that may be relevant for the process frame or process step. For risk assessments it is critical not to miss any hazards that may occur within a process frame. The process frame library can be seen as a comprehensive collection of process frames with associated potential hazards along with additional attributes like severity, likelihood and detectability, and product critical quality attributes. One of the technical challenges of risk management and risk mitigation is capturing of all possible hazards related to a specific process frame.

The hazard analysis unit calculates a weighted hazard criticality (WHC) for the process step based on all retrieved potential hazards and determined risk factors related to the associated process frame dataset or other variables associated with potential hazards such as equipment, zone, operator or even a specific product quality attribute. Once a set of potential hazards is retrieved and identified, the hazard analysis unit analyzes the degree of risk by determining the risk factors for this particular process step or process frame. According to an example, the determination of risk factors is based on an analysis of the process frame dataset.

According to an example, determining risk factors for a hazard, a computer analysis of recorded video sequences of process frames by the hazard analysis unit can be employed. This can comprise a video sequence analysis to identify specific events or actions that may contribute to the occurrence of a particular hazard scenario. These events are then linked to relevant subjects and objects within the process frame, providing context for potential downstream effects. Machine learning algorithms are applied to quantify each event's likelihood of contributing to the hazard scenario based on frequency of occurrence, severity of impact, probability of detection. These quantified risk factors are then weighted and moderated based on their relative importance in contributing to the overall hazard scenario.

"Weighted Hazard Criticality" (WHC) is a formula used in Frame-by-Frame Risk Profiling to calculate the risk of a hypothetically possible hazard. The WHC takes into account three components: Hazard Severity which component assesses the potential impact or consequences if the hazard were to occur. Hazard Likelihood evaluates the probability that the hazard will actually occur. Hazard Detectability considers how easily the hazard or its outcome can be detected through monitoring, inspection, or other means. The WHC formula combines these three components using risk factors and risk moderators to produce a weighted score that represents the overall criticality of each possible hazard. The goal is to categorize hazards objectively based on their individual risk factors, allowing for prioritization and mitigation efforts. As an advantage, the Weighted Hazard Criticality (WHC) provides a quantitative measure of the potential risks associated with specific hazards in pharmaceutical manufacturing processes, enabling more informed decision-making regarding process control, monitoring, and quality assurance.

A process modelling unit calculates an overall process risk of a process based on the weighted hazard criticalities (WHC) of each process step of the process. In an example, an accumulated risk can be calculated using based on maximum WHC representing the highest potential risk associated with any single process frame and transformed WHCs representing WHC values of all other process frames, transformed (e.g., normalized or weighted) to account for their relative contributions to the overall process risk. This allows for an overall process risk score to be calculated based on the respective WHCs of all process frames. Additionally, risk moderators are considered in the calculation of the WHC and accumulated risks. Risk moderators can be used to adjust the base-risk score based on various contextual factors that influence the severity or impact of a potential hazard.

Examples of risk moderators can be the existence of barrier systems describing the presence and effectiveness of barriers, such as gloves, isolators, or biosafety cabinets, which can reduce the likelihood of contamination or exposure. Also, a decontamination status describes whether a surface has been properly decontaminated before use, which affects the risk of cross-contamination. Operator expertise refers to the level of training and experience an operator possesses in handling hazardous materials or equipment. Another example is environmental conditions, meaning factors like temperature, humidity, or air quality that can influence the stability or potency of a substance.

According to an embodiment, the object database and the action database are based on a property graph database comprising object datasets, action datasets, and related dependencies and relationships for modelling processes. A property graph database can be seen as a data storage system that utilizes the concept of property graphs to represent and manage complex relationships between entities, attributes, and values. A property graph represents and manages data entities using extended attributes of both objects (vertices) and their relationships (edges). In a property graph database, nodes can be thought of as representing individual data elements, such as manufacturing process steps, objects, risk or quality control measures.

Edges between these nodes represent relationships between the corresponding entities, for instance, "is used with" or "is dependent on". Each edge is associated with one or more properties that describe the nature and characteristics of this relationship.

These properties can include attributes like likelihoods, severities, detectabilities, and other relevant metrics related to risk assessment and risk management. By leveraging a property graph achitecture, a database can efficiently store, query, and analyze complex relationships between various entities involved in biopharmaceutical manufacturing processes, thereby leveraging sophisticated process data models. In an example, the property graph database is implemented as directed acyclic graphs (DAGs) database, which is particularly useful for modeling dynamic systems like manufacturing processes.

According to an embodiment of the invention, the property graph database is configured to additionally query a relational database storing object datasets and action datasets. In an example, in addition to, or instead of the relational database, a graph database is queried. A relational database is a type of database management system (DBMS) that organizes data into one or more tables, with each table having rows and columns like a spreadsheet. Each row represents a single record or instance of the entity being tracked, and each column represents a field or attribute of that entity. The relationships between these tables are defined using keys, which enable efficient retrieval and manipulation of data. By combining a property graph database with a relational database, the strengths of both technologies can be combined to create a comprehensive data management system for biopharmaceutical manufacturing processes. For example, the property graph database can be used to model complex relationships between process variables, equipment settings, and quality attributes, while the relational database provides a centralized repository for storing and integrating diverse types of structured data.

According to an embodiment, capturing process datasets comprise control data for devices involved in the process. Device control data from industrial robots can be used to describe a biopharmaceutical manufacturing process. For example, process parameter tracking refers to real-time measurements of temperature, pressure, flow rate, or position to monitor the process and detect deviations or trends that impact product quality or risks. Equipment configuration data refer to settings like speed, acceleration, and travel to model equipment behavior and understand how it affects the manufacturing process. Control signal analysis refers to insights into robot performance and process operation through motor currents or encoder values. This can indicate variations in load or friction that impact risk factors. Process event data relate to event data generated when certain conditions are met, such as reaching a specific position or completing a task. This can be used to model the process flow and identify key events. According to an example, device control data can refer to remotely controlled input devices like pointing devices, mouses or remotely operated tools.

According to an embodiment, detecting object datasets and/or action datasets is based on a machine-learning model trained with known object datasets and known action datasets. In a process frame dataset, objects are detected using a machine-learning model that is trained to recognize and classify the various entities involved in a pharmaceutical manufacturing process. A first step is to prepare the data by creating a labeled dataset and/or hierarchical class model containing examples of different objects (e.g., operators, machines, equipment) and their corresponding actions within a process frame. This dataset serves as input for training the machine-learning model. A suitable object detection model can be used to detect objects in the process frames.

According to an example, the machine learning model is one of the following models: YOLO (You Only Look Once) which is a real-time object detection system that detects objects in one pass. SSD (Single Shot Detector) is a fast and accurate detector that predicts bounding boxes and class probabilities simultaneously. Faster R-CNN refers to a region-based convolutional neural network that uses a Region Proposal Network to generate proposals for detecting objects. These models are trained on the labeled dataset, which contains examples of different objects and their corresponding actions within process frames. The machine learning model can be trained using the prepared data by optimizing its parameters through backpropagation while minimizing a loss function between predicted bounding boxes and class probabilities with respect to ground-truth annotations.

According to an example, to refine the object detection results, post-processing techniques such as non-maximum suppression or bounding box regression can be applied to remove duplicates and improve accuracy. After detecting objects in a process frame, the model can classify each detected object into one of several categories (e.g., operator, machine, equipment). This classification is based on features extracted from the object's appearance, such as shape, color, or texture.

According to an embodiment, the step of segmenting the process dataset into process frame datasets comprises recognizing, by a machine-learning model of the process data analysis unit, reference process frame datasets stored in the process frame library. The previously trained machine-learning model was trained with reference process frame datasets of the process frame library. In other words, the process data analysis unit compares data pattern of observed process frames with a set of known and predefined reference frames. The one with the highest similarity is identified and used as a basis for the segmentation, in particular establishing the start and end points of a potential process frame dataset which is known and applied to the process dataset. For example, a marker can be defined and stored in a process dataset to mark a begin and an end of a process frame dataset.

According to an embodiment, in the step of determining risk factors relating to hazard severance, hazard likelihood, and hazard detectability, the risk factors are determined by automatically or programmatically analyzing the process dataset or the frame datasets. The analyzing comprises recognizing, with the detection unit, objects and/or actions which influence risk factors. The risk factors that influence hazard severity, likelihood, and detectability are determined by analyzing the process dataset (e.g., video recording of a process step) or frame datasets using machine learning algorithms. The detection unit recognizes risk-relevant objects within the video recording or frame datasets. These objects can be equipment, materials, personnel, or other entities that play a crucial role in the process.

The detection unit also identifies actions performed by these recognized objects. Actions can include tasks such as operating machinery, handling materials, or performing maintenance activities. As the detection unit analyzes the video recording or frame datasets, it extracts relevant risk factors that influence hazard severity, likelihood, and detectability. These risk factors might include object properties (e.g., material type, size, shape), action characteristics (e.g., speed, force, duration), environmental conditions (e.g., temperature, humidity, lighting).

The extracted risk factors are then weighted based on their relative importance in influencing hazard severity, likelihood, and detectability. This weighting process is typically done using machine learning algorithms that learn from labeled or attributed data. The weighted risk factors are used to calculate the potential severity of a hazard scenario. The weighted risk factors are also used to calculate the likelihood of a hazard scenario occurring within the process frame. Finally, the weighted risk factors are used to determine the detectability of a hazard scenario.

This could involve assessing the effectiveness of existing monitoring systems, personnel training, and other measures that can help mitigate risks.

According to an embodiment, capturing process datasets comprises an analyzing of sensor data from operator glove sensors. The sensor data and glove sensors are adapted to describe a movement of an operator's hand and fingers. A process can also be described by tracking a movement of human hands or tools. The analysis involves processing the raw sensor data to extract meaningful information about the operator's actions, such as finger movements, grasping, and manipulation. The sensors can be sensors directly arranged at an operator's hand. Relevant features are extracted from the preprocessed data and can relate to finger bending angles, finger extension lengths, hand orientation (e.g., palm up, down), and finger separation distances.

In an example, gloves comprise force sensors and can detect the amount of pressure applied by an operator's finger, allowing for precise control over robotic arms or other devices. Glove sensors can provide tactile feedback to the wearer, enabling them to feel textures and shapes through a virtual interface. Grip strength sensors can monitor an operator's hand strength and adjust robotic grasping forces accordingly. Vibration sensors detect vibrations from tools or equipment, alerting the wearer to potential issues or changes in process conditions.

In another example, smart gloves with embedded sensors are used. These gloves combine sensor-equipped fingertips with a wearable device (e.g., smartwatch) to provide comprehensive hand tracking and control. Also, hand-mounted camera systems are attached to the fingers or palm capture images, allowing for augmented reality experiences or remote monitoring applications.

According to an embodiment, the method comprises the steps of defining a target condition for an overall process risk, creating, by the process modelling unit, a plurality of variants of a process by varying a sequence of the process steps, calculating, by a process modelling unit, the corresponding overall process risk for each variant of the process, and applying the process step sequence of a process variant fulfilling the defined overall process risk target condition. In other words, in this embodiment, a process optimization takes place wherein an optimal target state is defined. In this example, a set of process steps is given, only the sequence is changed. For each variant, the overall process risk is calculated and ranked in the light of the defined target condition. A target condition can be, for example, a maximum acceptable overall process risk, or a lowest possible overall process risk.

According to an embodiment, the method comprises the step of defining a target WHC, creating, by the process modelling unit, process frame dataset variants by adapting device control data for devices involved in the manufacturing process, determining, by the hazards analysis unit, risk factors describing a hazard severance, a hazard likelihood and/or a hazard detectability for each retrieved potential hazard associated with the process frame dataset variants, calculating, by the hazard analysis unit, a weighted hazard criticality (WHC) for the process frame dataset variants and related determined risk factors, and applying device control data to a device. The applied device control data relate to a process frame dataset variant which meets the target WHC condition. In other words, different value sets or datasets of control data for the devices like industrial robots or machinery are considered, and for each of the scenarios, the corresponding WHC for that process frame is calculated. Instead of sequence of steps or device control data, equipment design, equipment configuration, kind of equipment, equipment location or other context data of equipment use can be varied in different process variants.

According to an embodiment, the method comprises the step of generating control data for controlling an augmented reality or virtual reality device, the control data being based on the process dataset and process frame library and adapted to describe a process and/or related process steps. Process frame datasets can be used to control a VR (Virtual Reality) or an AR (Augmented Reality) device for training purposes by mapping the process frames to specific actions, gestures, or movements in the virtual environment. For example, a process frame "Operator takes tongs" might correspond to an action where the user puts on virtual gloves and picks up digital tongs. A process frame "Operator places vial in vial nest with tongs" might require the user to move their hands (tracked by sensors) to place a virtual vial into a virtual vial nest, using the digital tongs.

The VR/AR environment (scene) is generated based on the process frames and actions mapped above. The generation can include creating 3D models of equipment, materials, or personnel, designing interactive simulations that mimic real-world processes, or incorporating realistic sounds, lighting, and textures to enhance immersion. In an example, the user performs actions in the virtual environment, and their inputs are matched against the process frames. If a correct action is performed, the corresponding frame is marked as "complete" and the simulation advances to the next step. Additionally, the VR/AR system can provide feedback mechanisms to reinforce learning. Visual cues (e.g., green checkmarks or red X's) can indicate whether an action was correctly executed. Audio prompts provide guidance on what actions need improvement. Haptic feedback (vibrations, resistance, etc.) simulates the physical sensations of performing tasks in a real-world setting.

According to an embodiment, the method comprises the steps of providing a process frame dataset and corresponding risk factors, capturing, by the capturing unit, in real-time, a process step, determining, by the hazards analysis unit, current risk factors of the captured real-time process step, determining a deviation between the provided risk factors and the current real-time-based risk factors, generating control data for a feedback device for providing feedback to an operator if the deviation exceeds a pre-defined threshold. In other words, the risk of actually performed real-time actions of an operator are compared with risks that are associated with a reference process frame dataset. This way, a real time risk monitoring can be implemented, and, based on the comparison, an immediate feedback can be given to an operator if a process step is not executed properly.

According to an embodiment, in the step of capturing a process step, the capturing unit is a point cloud data capturing device. Examples of such devices are structured light scanners which project a pattern of light onto the scene and capture the deformation of this pattern as it is reflected off surfaces in the environment, Time-of-flight (ToF) cameras which measure the time it takes for light to bounce back from objects in the scene, creating a 3D point cloud of the environment. Stereo vision systems use two or more cameras with overlapping fields of view to calculate depth information by comparing the images captured by each camera. LIDAR (Light Detection and Ranging) sensors emit laser pulses that bounce off objects in the environment, returning reflected light signals to create a 3D point cloud of the scene. Also, photogrammetry can be used. This method uses multiple cameras or smartphones with overlapping fields of view to capture images from different angles. The software then combines these images to create a 3D point cloud of the scene.

It has to be understood that features of the method as described in the above and in the following may be features of the computer program, the computer-readable medium as described in the above and in the following, and vice versa.

These and other aspects of the invention will be apparent from and elucidated with reference to the embodiments described hereinafter.

### BRIEF DESCRIPTION OF THE DRAWINGS

In the following, the invention is explained by means of an embodiment and the figures.
Fig. 1 shows an operator intervention in a biopharmaceutical manufacturing process.
Fig. 2 shows a risk management process.
Fig. 3 shows a process dataset with process frame datasets and associated hazard criticalities.
Fig. 4 shows a method for calculating an overall process risk of a biopharmaceutical manufacturing process.
Fig. 5 shows a system for managing process risks of a biopharmaceutical manufacturing process.
Fig. 6 shows a method for optimizing an overall process risk based on different process step sequences.
Fig. 7 shows a method for optimizing an overall process risk based on adapting device control data.

The reference symbols used in the drawings, and their meanings, are listed in summary form in the list of reference symbols. In principle, identical parts are provided with the same reference symbols in the figures.

### DETAILED DESCRIPTION OF THE DRAWINGS

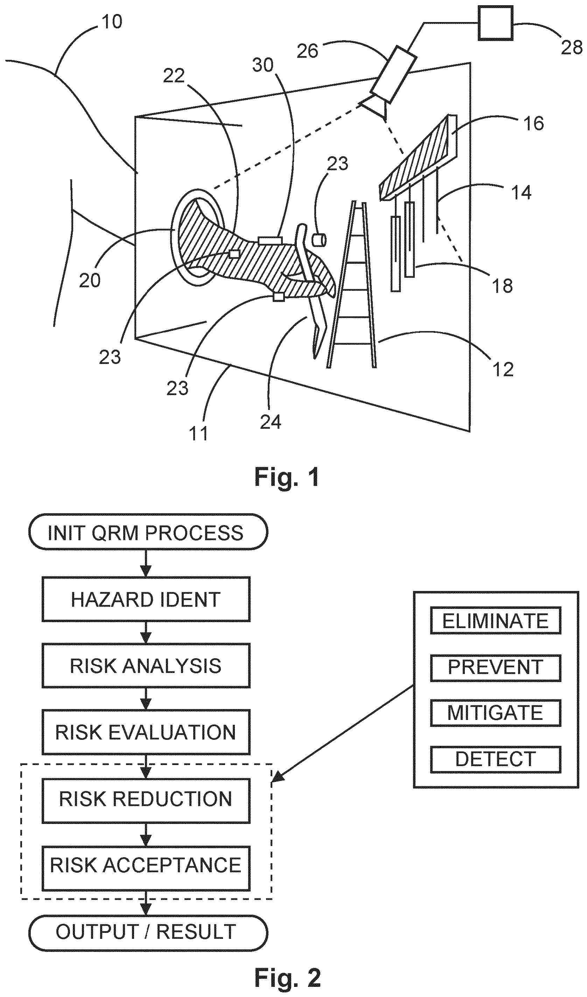

Fig. 1 shows an example of an operator intervention as part of a biopharmaceutical manufacturing process. Typically, such manufacturing processes take place in cleanrooms 11 as protected cabinets which are shielded from the environment to avoid unwanted contamination. In this example, a filling line 12 is shown where vials are filled with fluids such as vaccines. For that purpose, filling needles 14 are attached to needle holders 16 which are connected to pumps (not shown). Newly inserted or replaced filling needles 14 are usually covered with a needle holder bag 18. An operator 10 inserts his hand along using a glove 22 through a glove port 20. In this example, the operator holds forceps 24 to grab the needle holder bags 18 to remove them from the filling needles 14. This operator intervention usually consists of a sequence of micro-steps such as moving forceps 24, grabbing needle holder bag 18 and removing needle holder bag 18 from filling needles 14.

Each of these micro-steps imply risks, for instance contamination or damaging of objects. However, known solutions were not able to assess and calculate these risks on a granular and accurate level. The proposed solution comprises a capturing unit 26 with a media generation unit 28. The capturing unit 26 can be, for example, a video camera, 3D camera, lidar scanner or capturing unit capable of creating point cloud data. The capturing unit 26 can be arranged inside the cleanroom 11 capturing all relevant areas of the filling line 12 which need to be monitored. For example, multiple capturing units 26 can be provided to generate multidimensional video data or point cloud data, or to monitor specific areas of importance. The glove 22 is equipped with sensors 23 capable of capturing positions, movements, accelerations, turns and other relevant movements of the glove. This can include movements, gestures of arm, hands, fingers as well as the tool 24 used. A capturing unit 26 can, according to an example, be arranged at the glove 22. The glove 22 can be equipped with a feedback device 30, for example, generating vibrations if a failure in an operator's glove 22 movement is detected.

In Fig. 2, the generic risk management approach and process is shown. To implement an effective risk management system, the following steps are proposed. Firstly, potential hazards are identified. This means, that all possible hazards that are known or theoretically possible are documented as a basis for subsequent steps. A risk analysis refers to the determination of the actual risks of a given process or process step. A risk evaluation can be seen as an assessment to what extent the identified risks create minor, major or critical impact on the overall process or any other business metric. Essential parts of the risk management relate to risk reduction and risk acceptance. In order to reduce risks, several measures can be applied such as elimination, reduction, prevention, and mitigation. As a result, the process provides a risk assessment or risk calculation. For manufacturers of biopharmaceutical products, a clear description, definition and reduction of risks are essential to avoid unnecessary damages due to non-identified high process risks.

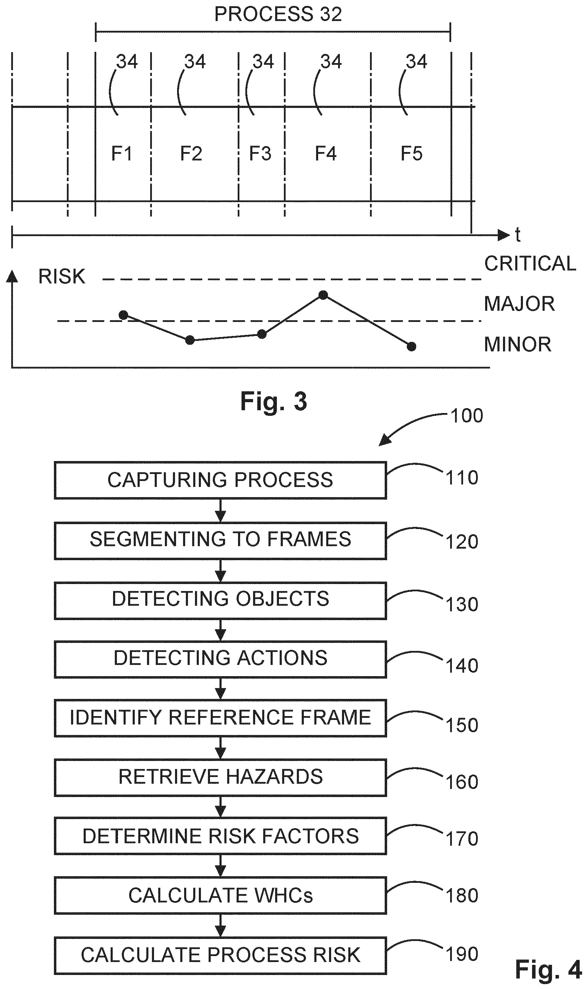

The current invention is based on a frame-by-frame approach which is depicted in Fig. 3. A process 32 which describes a sequence of process steps 34 may be a subset of an overall biopharmaceutical manufacturing process such as installation of a filling train. For example, the process 32 can be the task of the removal of all needle holder bags 18 (see example in Fig 1). This process 32 is segmented into process steps 34 or process frame datasets 34, wherein the dataset 34 describes the data representation of the physically executed step 34. Accordingly, the process dataset 32 can be understood as the data representation of the process 32. Each of the process frame datasets 34 represent a microstep defining a smallest logical coherent micro-step. These process frames of process frame datasets 34 can be seen as modular building blocks which in their entirety can constitute a process dataset 32.

In this example, a process 32 of removing a needle protection from a particular needle is described. Process frame F1 relates to grasping bottom of needle protection with forceps. Process frame F2 describes the step of partially pulling down needle protection with forceps. In frame F3, the middle of the needle protection is grasped with forceps. F4 relates to pulling of needle protection with forceps, and F5 describes a collecting of needle protection in left hand. Each of the described steps F1 to F5 imply risks which can be categorized in minor, major or critical. In Fig. 3, the weighted hazard criticalities WHC are calculated for each process frame 34. As it can be seen, a process can now be evaluated in terms of risks on a very detailed and granular level considering all possible potential hazards and their respective criticalities. The dotted lines refer to a separation of the process 34 into the process frames 34 providing markers for begin and end of the respective process frames 34 as described before and hereafter.

In Fig. 4, an example of a computer-implemented method 100 for calculating an overall process risk of process failures in biopharmaceutical manufacturing processes is disclosed. Step 110 relates to a capturing, by a capturing unit 26, a process dataset 32 representing a biopharmaceutical manufacturing process. The process dataset 32 comprises 2D video data, 3D stereoscopic video data, audio data, glove sensor data, process control data and/or point cloud data of the manufacturing process. The capturing unit 26 is a video camera, a radar device, a 3D stereoscopic camera, depth sensors, light scanner, sensor gloves 23 and/or time-of-flight camera. Step 120 relates to a segmenting, by a process data analysis unit 36, the process dataset 32 into process frame datasets 34, each process frame dataset 34 representing one single process step 34 of the manufacturing process. Step 130 relates to a detecting, by a detection unit, object datasets 40 representing physical objects 40 in the process frame dataset 34. Detecting objects 130 is based on an object database 44 configured for storing known objects 40.

Step 140 refers to detecting, by the detection unit 38, action datasets 42 in the process frame dataset 34, the action datasets representing actions 42 of the manufacturing process. Detecting 140 actions 42 is based on an actions database 46 configured for storing known action datasets 42. Step 150 refers to identifying, by a frame mapping unit 48, a similar reference process frame dataset 34 in a process frame library 15 by comparing the process frame dataset 34 with the detected objects 40 and actions 42 with reference process frame datasets 34 in the process frame library 50. The process frame library 50 is configured to store predefined reference process frame datasets 34 along with corresponding objects 40 and actions 42.

Step 160 refers to retrieving, by a hazards analysis unit 52, from the process frame library 50, potential process hazards 54 associated with a reference process frame dataset 34. The process frame library 50 is configured to store potential process hazards 54 associated with the reference process frame datasets 34. Step 170 refers to a determining, by the hazards analysis unit 52, risk factors 56 relating to hazard severance, a hazard likelihood and/or a hazard detectability for each retrieved potential hazard 54 associated with the identified process frame dataset 34. Step 180 relates to a calculating, by the hazard analysis unit 52, a weighted hazard criticality (WHC) for the process step 34 based on all retrieved potential hazards 54 and determined risk factors 56 related to the associated process frame dataset 34. Finally, step 190 refers to calculating, by a process modelling unit 60, an overall process risk 62 of a process 32 based on the weighted hazard criticalities (WHC) 58 of each process step 34 of the process 32.

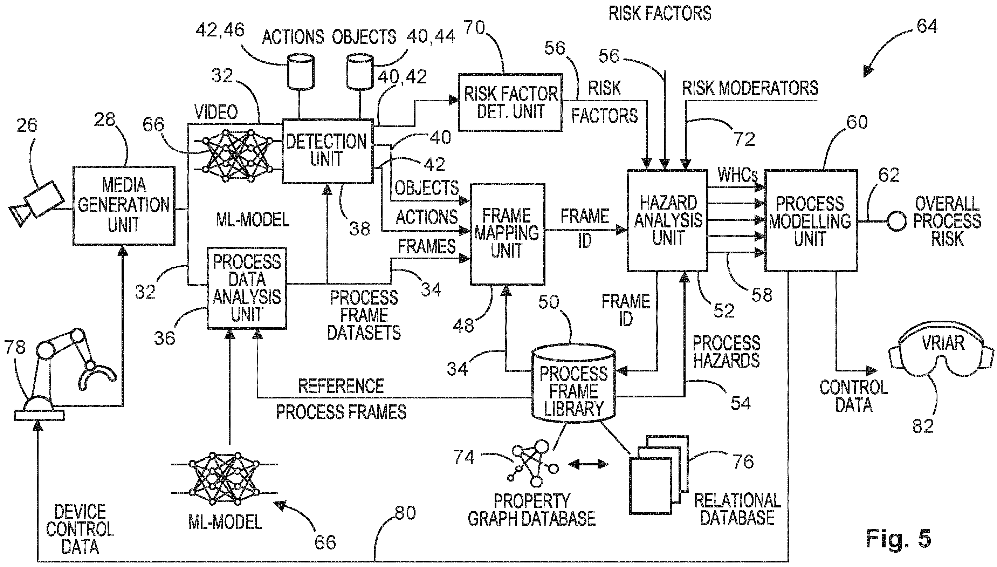

In Fig. 5, a system for risk management 64 is shown. This system architecture can be seen as implementation example of the process steps concerning the method for calculating process risks of a biopharmaceutical manufacturing process which has been described above. A capturing unit 26 records a video sequence of a part of a manufacturing process. A media generation unit 28 is adapted to process raw data from the capturing unit 26 and to generate compatible data formats like mov or mp4. Furthermore, compressed 3D video data or point cloud data can be generated by the media generation unit 28. The video or point cloud data are provided to a process data analysis unit 36, which segments the process dataset into process frame datasets.

This segmenting 120 is based on a segmentation machine learning model 66 which, for example, detects begin and end of a process frame dataset 34 by classifying it on the basis of reference process frames 34 retrieved from the process frame library 50. The segmentation can be implemented by settings timestamps in the process dataset and/or the process frame dataset along with additional meta data providing a description or specification of the particular process frame dataset 34. A detection unit 38 is adapted to detect actions 42 and objects 40. And actions database 46 and objects database 44 store known actions 42 and known objects 40 which can be used for classification on the basis of a detection machine learning model 66. The actions database 46 and the object database 44 can be relational databases or graph databases.

The detected objects 40 and actions 42 are provided to a risk factor determination unit 70 which is adapted to assess and determine risk factors 56 by analyzing the detected objects and actions along with additional data such as distances, speeds and other metadata. In other words, the specific local risk situation, and, based on that, risk factors 56 are determined. Input for the detection unit 38 can be the non-segmented process dataset 32, process frame datasets 34. A frame mapping unit 48 is adapted to identify similar reference process frames 34 which are retrieved from the process frame library 50. By processing objects 40, actions 42, and process frame datasets 34 from the previous stages, the frame mapping unit compares or classifies this information based on the known reference process frame datasets 34 to identify a reference frame dataset along with a Frame ID which has a highest similarity with the frame and objects and actions information provided.

The process frame library 50 can be seen as a repository of verified process frame datasets along with their associated risk information representing typical micro-steps of a biopharmaceutical manufacturing process. The data stored in the process frame library such as actions 42, objects 40, potential hazards 54, their relationships and dependencies, and other information, are stored in a property graph database 74. Additionally, a relational database 76 is provided in combination with the property graph database 74. A hazard analysis unit 52 is provided with a frame ID which references the identified relevant process frame type. The hazard analysis unit retrieves, by providing the frame ID to the process frame library 50, potential process hazards which are stored along with the respective process frame 34. Risk factors 56 are provided as input to the hazard analysis unit 52, wherein risk factors can be an output of the risk factor determination unit 70, or externally provided risk factors 56.

Additionally, risk moderators 72 such as the existence of barrier systems, decontamination status, or product recoverability are provided. These risk moderators 72 can be seen as external influencing factors that can have an influence on an overall risk assessment and/or the calculation of the WHC. Based on the risk factors, risk moderators 72, and retrieved potential process hazards 54, the weighted hazard criticalities WHC 58 for each process frame dataset 34 are calculated by the hazard analysis unit 52. Based on these multiple WHCs 58, an overall process risk 62 is calculated by the process modelling unit 60.

An increasing number of industrial robots 78 are deployed in manufacturing lines. These robots 78, also referred to as devices involved in the manufacturing process, also imply risks depending on their configuration and behavior. Device control data 80, which control the industrial robots, can be used to describe a process and can further be used as input data for the media generation unit 28 to generate process data 32. Another implementation option is the use of XR devices 82. In particular for training purposes, the process modelling unit 60 can automatically generate training content and documentation. Examples are classic text or rich text documents or media files such as videos or virtual environments displayed in devices like XR devices 82.

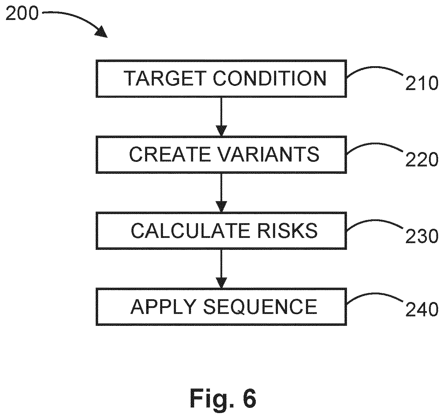

In Fig. 6, a method 200 for optimizing an overall process risk 62 based on different process step sequences is disclosed. This method can be executed in combination with the previously described method 100. In a first step 210, a target condition for an overall process risk is defined. This can be, for example, a minimum or maximum acceptable risk level or risk value. In a next step 220, the process modelling unit 60 creates multiple variants of a process 32 by varying or changing a sequence of the process steps 34. According to an example, existing process frame datasets 32 are replaced with process frame datasets that represent possible alternatives, for example, having a lower WHC. In other words, by changing a sequence of process steps 34, an overall process risk changes. By selecting a sequence of process frames 34 where an overall process risk 62 is lower than a defined threshold or represents a lowest possible overall process risk 62, the entire process can be optimized related to risk.

In Fig. 7, a method for optimizing an overall process risk 62 based on adapting device control data 80 of a device involved in the manufacturing process is described. Firstly, a target WHC is defined which can be a maximum WHC or a threshold defining a maximum acceptable WHC, or a lowest possible WHC. Step 320 refers to creating, by the process modelling unit 60, process frame dataset 34 variants by adapting device control data 80 for devices involved in the manufacturing process. Step 330 refers to determining, by the hazards analysis unit 52, risk factors 56 describing a hazard severance, a hazard likelihood and/or a hazard detectability for each retrieved potential hazard 54 associated with the process frame dataset 34 variants.

Step 340 refers to calculating, by the hazard analysis unit 52, a weighted hazard criticality (WHC) 58 for the process frame dataset 34 variants and related determined risk factors 56. Step 350 refers to applying device control data 80 to a device such as a robot 78, wherein the device control data 80 relate or are associated to a process frame dataset 34 variant which meets the target WHC condition. In other words, a number of different device settings or configuration settings of an industrial robot 78 is taken as input data and, based on these settings, the respective WHCs 58 and/or overall process risks 62 are calculated. In the simulation task, a scenario with a lower risk can be determined and applied.

In this document, the terms "and", "or" and "either ... or" are used as conjunctions in a meaning similar to the logical conjunctions "AND", "OR" (often also "and/or") or "XOR", respectively. In particular, in contrast to "either ... or", the term "or" also includes occurrence of both operands ("and/or"). Method steps indicated in the description, or the claims, only serve an enumerative purpose of the method steps. They only imply a given sequence or an order where their sequence or order is explicitly expressed or is - obvious for the skilled person - mandatory due to their nature. In particular, the listing of method steps does not imply that this listing is exhaustive. Further steps may be interposed. Also, not all method steps described in an embodiment are required to implement the invention. The required method steps are defined by the claims. In the description and claims, the term "comprising" does not exclude existence or presence of other elements or steps. The indefinite article "a" or "an" does not exclude a plurality and must be understood as "at least one".

### LIST OF REFERENCE SIGNS

- 10: operator
- 11: cleanroom
- 12: filling line
- 14: filling needles
- 16: needle holder
- 18: needle holder bag
- 20: glove port
- 22: glove
- 23: glove sensors
- 24: forceps
- 26: capturing unit
- 28: media generation unit
- 30: feedback device
- 32: process / process dataset
- 34: process step / process frame dataset
- 36: process data analysis unit
- 38: detection unit
- 40: objects / object datasets
- 42: actions / action datasets
- 44: objects database
- 46: actions database
- 48: frame mapping unit
- 50: process frame library
- 52: hazards analysis unit
- 54: potential hazards
- 56: risk factors
- 58: weighted hazard criticality WHC
- 60: process modelling unit
- 62: overall process risk
- 64: system for risk management
- 66: segmentation ML model
- 68: detection ML model
- 70: risk factor determination unit
- 72: risk moderators
- 74: property graph database
- 76: relational database
- 78: industrial robot (devices)
- 80: device control data
- 82: XR device
- 100: method for calculating an overall process risk
- 110: capturing a process dataset
- 120: segmenting process dataset into process frame datasets
- 130: detecting object datasets
- 140: detecting action datasets
- 150: identifying similar reference process frame datasets
- 160: retrieving potential process hazards
- 170: determining risk factors
- 180: calculating weighted hazard criticality
- 190: calculating an overall process risk
- 200: method for optimizing an overall process risk
- 210: defining target condition
- 220: creating variants of a process
- 230: calculating an overall process risk
- 240: applying process step sequence of one variant
- 300: method for optimizing an overall process risk by adapting device control data
- 310: defining target WHC
- 320: creating dataset variants
- 330: determining risk factors
- 340: calculating WHCs
- 350: applying device control data

## Claims

1. A computer-implemented method (100) for calculating an overall process risk (62) of process failures in biopharmaceutical manufacturing processes, the method (100) comprising the steps of:
- capturing (110), by a capturing unit (26), a process dataset (32) representing a biopharmaceutical manufacturing process;
wherein the process dataset (32) comprises 2D video data, 3D stereoscopic video data, audio data, glove sensor data, process control data and/or point cloud data of the manufacturing process;
wherein the capturing unit (26) is a video camera, a radar device, a 3D stereoscopic camera, depth sensors, light scanner, sensor gloves and/or time-of-flight camera;
- segmenting (120), by a process data analysis unit (36), the process dataset (32) into process frame datasets (34), each process frame dataset (34) representing one single microstep of the manufacturing process;
- detecting (130), by a detection unit (38), object datasets (40) representing physical objects in the process frame dataset (34);
wherein detecting objects (130) is based on an object database (44) configured for storing known objects (40);
- detecting (140), by the detection unit (38), action datasets (42) in the process frame dataset (34), the action datasets (42) representing actions (42) of the manufacturing process;
wherein detecting actions (140) is based on an action database (46) configured for storing known action datasets (42);
- identifying (150), by a frame mapping unit (48), a similar reference process frame dataset (34) in a process frame library (50) by comparing the process frame dataset (34) with the detected objects (40) and actions (42) with reference process frame datasets (34) in the process frame library (50);
wherein the process frame library (50) is configured to store predefined reference process frame datasets (34) along with corresponding objects (40) and actions (42);
- retrieving (160), by a hazards analysis unit (52), from the process frame library (50), potential process hazards (54) associated with a reference process frame dataset (34);
wherein the process frame library (50) is configured to store potential process hazards (54) associated with the reference process frame datasets (34);
- determining (170), by the hazards analysis unit (52), risk factors (56) relating to hazard severance, a hazard likelihood and/or a hazard detectability for each retrieved potential hazard (54) associated with the identified process frame dataset (34);
- calculating (180), by the hazard analysis unit (52), a weighted hazard criticality (WHC) (58) for each retrieved potential hazard (54) considering the determined risk factors (56) related to the associated process frame dataset (34);
- calculating (190), by a process modelling unit, an overall process risk (62) of a process (32) based on the weighted hazard criticalities (WHC) (58) of each process frame dataset (34) of the process (32).

2. Method (100) according to claim 1, wherein the object database (44) and the action database (46) are based on a property graph database (74) comprising object datasets (40), action datasets (42), and related dependencies and relationships for modelling manufacturing processes (32).

3. Method (100) according to claim 2, wherein the property graph database (74) is configured to additionally query a relational database (76) storing object datasets (40) and action datasets (42).

4. Method (100) according to any of the claims 1 to 3, wherein capturing process (110) datasets comprises capturing control data (80) for devices (78) involved in the process.

5. Method (100) according to any of the claims 1 to 4, wherein detecting (130, 140) object datasets and/or action datasets is based on a machine-learning model (68) trained with known object datasets (40) and known action datasets (42).

6. Method (100) according to any of the claims 1 to 5, wherein the step of segmenting (21) the process dataset (32) into process frame datasets (34) comprises recognizing, by a machine-learning model (66) of the process data analysis unit (36), reference process frame datasets (34) stored in the process frame library (50);
wherein the machine-learning model (66) was trained with reference process frame datasets (34) of the process frame library (50).

7. Method (100) according to any of the claims 1 to 6, wherein the step of determining risk factors (170) relating to hazard severance, hazard likelihood, and hazard detectability, the risk factors (56) are determined by automatically analyzing the process dataset (32) or the Process frame datasets (34);
wherein analyzing comprises recognizing, with the detection unit (38), objects (40) and/or actions (42) which influence risk factors (56).

8. Method (100) according to any of the claims 1 to 7, wherein capturing process datasets (110) comprises analyzing sensor data from operator glove sensors (23);
wherein the sensor data and glove sensors (23) are adapted to describe a movement of an operator's hand and fingers.

9. Method (100, 200) according to any of the claims 1 to 8, comprising the steps of
- defining (210) a target condition for an overall process risk;
- creating (220), by the process modelling unit, a plurality of variants of a process by varying a sequence of the process steps;
- calculating (230), by a process modelling unit (60), the corresponding overall process risk (62) for each variant of the process according to claims 1 to 8;
- applying (240) the process step sequence of a process variant fulfilling the defined overall process risk target condition.

10. Method (100, 300) according to any of the claims 1 to 9, comprising the step of
- defining (310) a target WHC;
- creating (320), by the process modelling unit, process frame dataset variants by adapting device control data for devices involved in the manufacturing process;
- determining (330), by the hazards analysis unit (52), risk factors (56) describing a hazard severance, a hazard likelihood and/or a hazard detectability for each retrieved potential hazard (54) associated with the process frame dataset (34) variants;
- calculating (340), by the hazard analysis unit, a weighted hazard criticality (WHC) for the process frame dataset (34) variants and related determined risk factors (56);
- applying (350) device control data (80) to a device;
wherein the device control data (80) relate to a process frame dataset (34) variant which meets the target WHC condition.

11. Method (100,200,300) according to any of the claims 1 to 10, comprising a step of
- generating control data for controlling an augmented reality or virtual reality device (82), the control data being based on the process frame dataset (34) and process frame library (50) and adapted to describe a process (32) and/or related process steps (34).

12. Method (100,200,300) according to any of the claims 1 to 11, comprising the steps of
- providing a process frame dataset (34) and corresponding risk factors (56);
- capturing, by the capturing unit (26), in real-time, a process step (34);
- determining, by the hazards analysis unit (52), current risk factors (56)of the captured real-time process step (34);
- determining a deviation between the provided risk factors (56) and the current real-time-based risk factors (56;
- generating control data for a feedback device (30) for providing feedback to an operator (10) if the deviation exceeds a pre-defined threshold.

13. Method (100,200,300) according to any of the claims 1 to 12, wherein, in the step of capturing a process (32), the capturing unit (26) is a point cloud data capturing device.

14. A computer program comprising instructions which, when the program is executed by a computer, cause the computer to carry out the method (100,200,300) of any one of claims 1 to 13.

15. A computer-readable medium comprising instructions which, when executed by a computer, cause the computer to carry out the method (100,200,300) of any one of claims 1 to 13.

## Amended claims

### Amended claims in accordance with Rule 137(2) EPC.

1. A computer-implemented method (100) for calculating an overall process risk (62) of process failures in biopharmaceutical manufacturing processes, the method (100) comprising the steps of:
- capturing (110), by a capturing unit (26), a process dataset (32) representing a biopharmaceutical manufacturing process;
wherein the process dataset (32) comprises 2D video data, 3D stereoscopic video data, audio data, glove sensor data, process control data and/or point cloud data of the manufacturing process;
wherein the capturing unit (26) is a video camera, a radar device, a 3D stereoscopic camera, depth sensors, light scanner, sensor gloves and/or time-of-flight camera;
- segmenting (120), by a process data analysis unit (36), the process dataset (32) into process frame datasets (34), each process frame dataset (34) representing one single microstep of the manufacturing process;
- detecting (130), by a detection unit (38), object datasets (40) representing physical objects in the process frame dataset (34);
wherein detecting objects (130) is based on an object database (44) configured for storing known objects (40);
- detecting (140), by the detection unit (38), action datasets (42) in the process frame dataset (34), the action datasets (42) representing actions (42) of the manufacturing process;
wherein detecting actions (140) is based on an action database (46) configured for storing known action datasets (42);
- identifying (150), by a frame mapping unit (48), a similar reference process frame dataset (34) in a process frame library (50) by comparing the process frame dataset (34) with the detected objects (40) and actions (42) with reference process frame datasets (34) in the process frame library (50);
wherein the process frame library (50) is configured to store predefined reference process frame datasets (34) along with corresponding objects (40) and actions (42);
- retrieving (160), by a hazards analysis unit (52), from the process frame library (50), potential process hazards (54) associated with a reference process frame dataset (34);
wherein the process frame library (50) is configured to store potential process hazards (54) associated with the reference process frame datasets (34);
- determining (170), by the hazards analysis unit (52), risk factors (56) relating to hazard severance, a hazard likelihood and/or a hazard detectability for each retrieved potential hazard (54) associated with the identified process frame dataset (34);
- calculating (180), by the hazard analysis unit (52), a weighted hazard criticality (WHC) (58) for each retrieved potential hazard (54) considering the determined risk factors (56) related to the associated process frame dataset (34);
- calculating (190), by a process modelling unit, an overall process risk (62) of a process (32) based on the weighted hazard criticalities (WHC) (58) of each process frame dataset (34) of the process (32);
wherein capturing (110) process datasets comprises capturing control data (80) for devices (78) involved in the process;
wherein the method (100, 300) comprises the step of
- defining (310) a target WHC;
- creating (320), by the process modelling unit, process frame dataset variants by adapting device control data for devices involved in the manufacturing process;
- determining (330), by the hazards analysis unit (52), risk factors (56) describing a hazard severance, a hazard likelihood and/or a hazard detectability for each retrieved potential hazard (54) associated with the process frame dataset (34) variants;
- calculating (340), by the hazard analysis unit, a weighted hazard criticality (WHC) for the process frame dataset (34) variants and related determined risk factors (56);
- applying (350) device control data (80) to a device being a robot (78);
wherein the device control data (80) relate to a process frame dataset (34) variant which meets the target WHC condition.

2. Method (100) according to claim 1, wherein the object database (44) and the action database (46) are based on a property graph database (74) comprising object datasets (40), action datasets (42), and related dependencies and relationships for modelling manufacturing processes (32).

3. Method (100) according to claim 2, wherein the property graph database (74) is configured to additionally query a relational database (76) storing object datasets (40) and action datasets (42).

4. Method (100) according to any of the claims 1 to 3, wherein detecting (130, 140) object datasets and/or action datasets is based on a machine-learning model (68) trained with known object datasets (40) and known action datasets (42).

5. Method (100) according to any of the claims 1 to 4, wherein the step of segmenting (21) the process dataset (32) into process frame datasets (34) comprises recognizing, by a machine-learning model (66) of the process data analysis unit (36), reference process frame datasets (34) stored in the process frame library (50);
wherein the machine-learning model (66) was trained with reference process frame datasets (34) of the process frame library (50).

6. Method (100) according to any of the claims 1 to 5, wherein the step of determining risk factors (170) relating to hazard severance, hazard likelihood, and hazard detectability, the risk factors (56) are determined by automatically analyzing the process dataset (32) or the Process frame datasets (34);
wherein analyzing comprises recognizing, with the detection unit (38), objects (40) and/or actions (42) which influence risk factors (56).

7. Method (100) according to any of the claims 1 to 6, wherein capturing process datasets (110) comprises analyzing sensor data from operator glove sensors (23);
wherein the sensor data and glove sensors (23) are adapted to describe a movement of an operator's hand and fingers.

8. Method (100, 200) according to any of the claims 1 to 7, comprising the steps of
- defining (210) a target condition for an overall process risk;
- creating (220), by the process modelling unit, a plurality of variants of a process by varying a sequence of the process steps;
- calculating (230), by a process modelling unit (60), the corresponding overall process risk (62) for each variant of the process according to claims 1 to 7;
- applying (240) the process step sequence of a process variant fulfilling the defined overall process risk target condition.

9. Method (100,200,300) according to any of the claims 1 to 8, comprising a step of
- generating control data for controlling an augmented reality or virtual reality device (82), the control data being based on the process frame dataset (34) and process frame library (50) and adapted to describe a process (32) and/or related process steps (34).

10. Method (100,200,300) according to any of the claims 1 to 9, comprising the steps of
- providing a process frame dataset (34) and corresponding risk factors (56);
- capturing, by the capturing unit (26), in real-time, a process step (34);
- determining, by the hazards analysis unit (52), current risk factors (56)of the captured real-time process step (34);
- determining a deviation between the provided risk factors (56) and the current real-time-based risk factors (56;
- generating control data for a feedback device (30) for providing feedback to an operator (10) if the deviation exceeds a predefined threshold.

11. Method (100,200,300) according to any of the claims 1 to 10, wherein, in the step of capturing a process (32), the capturing unit (26) is a point cloud data capturing device.

12. A computer program comprising instructions which, when the program is executed by a computer, cause the computer to carry out the method (100,200,300) of any one of claims 1 to 11.

13. A computer-readable medium comprising instructions which, when executed by a computer, cause the computer to carry out the method (100,200,300) of any one of claims 1 to 12.
